Europäisches Patentamt

European Patent Office

Office européen des brevets

(11) Publication number: **0 402 043**
**A2**

## EUROPEAN PATENT APPLICATION

(21) Application number: **90305930.1**

(51) Int. Cl.5: **B29C 51/00**

(22) Date of filing: **31.05.90**

(30) Priority: **07.06.89 US 362535**

(43) Date of publication of application:
**12.12.90 Bulletin 90/50**

(84) Designated Contracting States:
**AT BE CH DE DK ES FR GB GR IT LI LU NL SE**

(71) Applicant: **MOBIL OIL CORPORATION**
**150 East 42nd Street**
**New York New York 10017(US)**

(72) Inventor: **Breidt, Peter, Jr.**
**1606 Bridgeboro Drive**
**Webster, New York 14580, New York(US)**
Inventor: **Wagner, John Ralph, Jr.**
**300 Ashley Drive**
**Rochester, New York 14620, New York(US)**

(74) Representative: **Colmer, Stephen Gary et al**
**Mobil Court 3 Clements Inn**
**London WC2A 2EB(GB)**

(54) **Process for producing thermoformable polypropylene films and sheets.**

(57) The process comprises the steps of providing a polypropylene film or sheet, the film or sheet produced from a resin selected from the group of homopolymers and copolymers of propylene and mixtures thereof and stretching the film or sheet in at least one direction to obtain a partial orientation of a degree effective to minimize sag during thermoforming. A process for thermoforming polypropylene is also provided.

EP 0 402 043 A2

## PROCESS FOR PRODUCING THERMOFORMABLE POLYPROPYLENE FILMS AND SHEETS

THIS INVENTION relates to thermoforming processes; more particularly; this invention relates to processes for thermoformed polymers of propylene, in film or sheet form; and to the thermoformed shapes so produced.

Polypropylene possesses several highly desirable properties: for example, low specific gravity, high heat resistance, good chemical resistance, excellent impact resistance and high stiffness. Because of these desirable properties, polypropylene homopolymers and copolymers find extensive use in industry, with homopolymers being used in approximately 80% of all applications. Homopolymers are generally produced having melt flow rates (MFR) from less than 1 to greater than 100, with lower MFR grades (below 3 being commonly employed) being used for sheet, film and general purpose extrusion. However, problems are encountered when attempting to thermoform such films and sheets. As noted at page 72 of the Modern Plastics Encyclopedia, J. Arganoff, Editor, McGraw-Hill Inc., 1985: "Sheet applications have traditionally been limited by poor melt strength, which makes (polypropylene) difficult to thermoform using conventional techniques." The poor melt strength characteristic of polypropylene causes the sheets and films made therefrom to sag when heated during the thermoforming operation. Likewise, U.S. 4 256 687 teaches away from the present invention.

To address the problems associated with thermoforming polypropylene, costly high melt strength polypropylene resins have been developed specifically for thermoforming applications. Also, the recent development of modified thermoforming processes, such as the Shell-developed solid-phase pressure-forming process (SPPF) which operates below the melting point of polypropylene, or the differential pressure forming method of U.S. Patent 4 666 544, has increased the use of polypropylene in thermoforming.

Japanese Patent Publication No. 14575/74 provides another proposal for the use of polypropylene in thermoforming. This reference discloses a process for the heat molding of crystalline polyolefin resins in solid form at a temperature lower than their melting point for the purpose of improving the transparency of the products so produced. This process is said to be particularly effective in heat molding polypropylene; however, a lower effectiveness is exhibited when the products are prepared by molding comparatively high molecular weight resins having an MFR of four or less. Thus, to eliminate such a disadvantage, it is necessary to use resins which have a high MFR and are therefore very disadvantageous in the area of impact resistance. The use of the thermoforming temperature lower than the melting point of polypropylene, while certainly better than the use of a thermoforming temperature higher than the melting point, will not, of itself, thoroughly eliminate such sagging.

Still another attempt to eliminate the sagging of resin sheets at the time of thermoforming is disclosed in Japanese Patent Publication No. 75761/76. In this invention, a polypropylene sheet is laminated onto a sagging-free sheet of resin different from polypropylene; however, this may be unsuitable for general use since it raises problems: for example, as to lamination means and selection of resins used.

Despite these developments, it would be highly desirable, especially from an economic standpoint, to utilize conventional polypropylene resins to form films and sheets which are thermoformable using conventional thermoforming processes.

This invention seeks to provide thermoformable films and sheets of conventional polymers of propylene which may be thermoformed using conventional thermoforming techniques and equipment.

Accordingly, therefore, to one aspect of this invention, there is provided a process for producing a thermoformed film or sheet comprising a polymer of propylene, which process comprises:

    (a) orienting the film or sheet by stretching it in at least one direction;

    (b) heating the oriented film or sheet to a temperature to permit deformation thereof;

    (c) deforming the heated film or sheet to a predetermined shape; and

    (d) while so deformed, cooling the film or sheet to cause retention of the predetermined shape.

The conventional thermoforming techniques utilisable in the present invention include those commonly known as straight vacuum forming; drape forming; matched mold forming; plug assist forming; pressure bubble-plug assist vacuum forming; vacuum snapback; pressure bubble vacuum snapback; trapped sheet, contact heat, pressure forming; air-slip forming; and any other such technique wherein a heated, film or sheet it utilized. Thermoforming systems using either cut sheet or continuous web material are both within the scope of the present invention. Details of the aforementioned thermoforming techniques are given by D. Irwin, in "Thermoforming," Modern Plastics Encyclopedia, McGraw-Hill Inc., 1989, pps. 301-304.

It is to be understood that thermoforming processes specifically designed for polypropylene film or sheet thermoforming, such as the process known to those skilled in the art as solid-phase pressure-forming (SPPF), are not to be considered a conventional thermoforming process for purposes herein. However, it is clear that such non-conventional processes as the SPPF process and also high melt strength polypropylene resins developed specifically for thermoforming applications, may be improved by the process of the present invention and, as such, should not be excluded from the list of thermoforming methods or materials utilisable in the present invention. The SPPF process is described in detail in H.J. Foster, "Solid Phase Pressure Forming", Modern Plastics Encyclopedia, McGraw-Hill Inc., 1989, pps 304-306.

Any polypropylene resin capable of being formed into a film or sheet may be utilised in the process of the present invention. It is to be understood for the purposes of this patent application that, consistent with industry usage, the use of the term "film" refers to a formed material having a gauge thickness of less than or equal to 10 mils, whereas the use of the term "sheet" refers to such a material having a gauge thickness of greater than 10 mils, the forming of which is accomplished, for example, by blown-film extrusion and roll-cast extrusion. Preferred resins include homopolymers of propylene, copolymers of propylene, especially wherein the major comonomer constituent is propylene and mixures of at least one such polymer. Particularly preferred are the random copolymers of propylene and ethylene wherein the ethylene comonomer content comprises 0.1 to 10 percent by weight of the overall copolymer. Still more preferred are the random copolymers of propylene wherein the ethylene comonomer comprises 0.1 to 7.0 percent by weight of the compolymer, especially, 1.0 to 3.5 percent by weight.

The process of the present invention seeks to solve the problem of sag during thermforming by providing a partially oriented film or sheet designed to shrink to correspond with the tendency to sag encountered in conventional thermoforming. This controlled shrinkage of the film or sheet thus will present a taut surface to the mold being used in thermoforming. Further, it has now been discovered that, when using the particularly preferred random copolymers of propylene and ethylene, the shrinkage tends to increase as the ethylene content increases, thus providing, for the first time, the ability to produce films and sheets having a controlled level of shrinkage during thermoforming.

In a further aspect this invention provides the use of orientation by stretching in at least one direction, prior to its thermoforming, of a film or sheet comprising a polymer of propylene to obtain an at least partial compensation of the sag otherwise induced on thermoforming the film or sheet.

In a still further aspect this invention provides the use of randomly polymerised ethylene in a copolymer of propylene formed as a film or sheet to obtain an at least partial compensation of the sag otherwise induced on thermoforming the oriented film or sheet.

Polypropylene films and sheets for use in the present invention may be produced using any of the well-known processes such as foll-casting, blown film extrusion and calendering. Details of these processes are provided by Z. Tadmor and C.G. Gogos in Principles of Polymer Processing, John Wiley & Sons, New York, 1979, Chapter 1, pages 7-11, Chapter 14, pages 624-631, Chapter 15, pages 637-641 and Chapter 16, pages 661-668. The roll-casting process is preferred in the practice of the present invention.

Molecular orientation may be imparted by the well-known tentering or roll stretching processes for flat films and sheets produced by roll-casting or calendering, or by the bubble or tubular process, for films produced by blown-film extrusion. Within these two general categories, a great variety of acceptable mechanical devices exist, as those skilled in the art will readily understand.

In the bubble process, a tube is extruded at about 200°C, rapidly quenched to about 0 to 20°C, then reheated to about 100 to 150°C by cylindrical radiant heaters and expanded about two to ten times circumferentially under air pressure while being axially accelerated about two to ten times by the take-away nip rolls. Film so made is heat shrinkable at 100 to 150°C and can typically shrink up to 40 to 50% at 120°C. A heat-stabilized film with a shrinkage of less than 3 to 5% at 120°C can be obtained by reinflating the flattened bubble, under lower air pressure, and passing it through tubular heating elements which heat the film for a few seconds to a temperature close to its melting point, i.e., 160°C, then collapsing the tube.

In the tentering process, a film or sheet, which may already be uniaxially oriented in the machine direction (MD) as a result of its forming process, is provided with transverse direction (TD) orientation by attaching edge clips to the film or sheet progressively and stretching the film perpendicular to its machine direction travel. The tentering process is described in more detail by W.R.R. Park and J. Conrad in "Biaxial Orientation,"Extrusion and Other Plastics Operations, John Wiley & Sons, 1971, pages 103-135.

A method of determining molecular orientation is described in the The Journal of Polymer Science. Volume XLVII, pages 289-306 (1960), in an article entitled "X-Ray Determination of the Crystallite Orientation Distribution of Polyethylene Terephthalate Films," by C.J. Heffelfinger and R.L. Burton; and "Structure and Properties or Oriented Poly(ethylene Terephthalate) Films," by Heffelfinger and Schmidt in the Journal of Applied Polymer Science, Volume 9, page 2661 (1965).

The polyolefin resins used herein may be incorporated with antistatic agents, antioxidants, ultraviolet light absorbers and other ordinary additives without adverse effects. They may also be incorporated with nucleating agents.

In the thermoforming, the sheet is preferably deformed by sub-atmospheric pressure exerted on one side thereof; desirably the deformation is assisted by a mechanical plug, as predetermined shape, and/or super-atmospheric pressure exerted on the other side thereof.

The following Examples illustrate the invention.

## EXAMPLES 1 TO 13

These Examples describe the production of partially oriented polypropylene films having nominal gauge thicknesses of 2.0 to 5.3 mils, the resultant properties obtained when gauge, resin type and orientation are varied and the relative thermoformability of each film.

The aforementioned roll-casting film extrusion process was utilised for all films. The film extrusion line was made up of a standard extruder screw, barrel, die, take-off and wind-up equipment. A die gap of 0.080 inches was used for all seven films produced. Quench temperature was maintained within a range of 80 to 110° F, which satisfied the need to maintain uniform temperature at the MD stretch zone. Each film was stretched using a tenter stretching device of the type previously described.

Three types of polypropylene resins were used: (1) a homopolymer; (2) a random copolymer containing 1% ethylene comonomer and; (3) a random copolymer containing 3.5% ethylene comonomer. The homopolymer and the 3.5% ethylene random copolymer were obtained from the Fina Oil and Chemical Company of Dallas, TX and the 1% ethylene random copolymer was obtained from the Shell Chemical Company of Houston, TX.

Properties of the films so produced are shown in Table 1:

TABLE 1

| POLYPROPYLENE FILM PROPERTIES | | | | | | | | | |
|---|---|---|---|---|---|---|---|---|---|
| 2.0 TO 5.3 MIL Gauge | | | | | | | | | |
| | | | ORIENTATION | | | PERCENT SHRINKAGE AT | | | |
| | | | | | | 225° F | | 275° F | |
| EX. | RESIN | | NORMAL GAUGE (MIL) | MDS (NOM.) | TDX (NOM.) | MD | TD | MD | TD |
| 1 | Homopolymer[1] | | 3.0 | 4.0 | 7.1 | -0.7 | -1.7 | -1.7 | -1.7 |
| 2 | Homopolymer[1] | | 3.6 | 4.7 | 6.3 | -0.9 | -0.2 | -1.6 | -1.1 |
| 3 | 1% Ethylene[2] Random Copolymer | | 4.0 | 4.7 | 7.0 | -1.3 | +0.1 | -3.6 | -1.2 |
| 4 | 1% Ethylene[2] Random Copolymer | | 5.3 | 4.7 | 7.0 | -1.0 | +0.4 | -3.8 | +0.3 |
| 5 | 3.5% Ethylene[3] Random Copolymer | | 2.0 | 5.0 | 8.0 | -7.3 | -12.8 | -36.0 | -49.3 |
| 6 | 3.5% Ethylene[3] Random Copolymer | | 3.0 | 4.1 | 7.5 | -6.0 | -10.0 | -30.5 | -48.3 |
| 7 | 3.5% Ethylene[3] Random Copolymer | | 4.0 | 4.0 | 7.1 | -5.3 | -9.7 | -23.0 | -43.5 |

[1] Fina W-472 Propylene Homopolymer
[2] Shell WRS-6 1% Ethylene Random Copolymer
[3] Fina W-756 3.5% Ethylene Random Copolymer

As indicated, it is generally the case that, as the ethylene content is increased, holding gauge thickness, machine direction orientation (MDX) and transverse direction orientation (TDX) approximately constant, percent shrinkage increases. Thus, when thermoforming sag is a particular problem, a random copolymer of higher ethylene content, which would provide a higher degree of shrinkage could be advantageously utilized.

Likewise, the above data demonstrate that as orientation is increased in a particular direction, percent shrinkage in that direction will generally also increase. This provides a similar benefit when thermoforming such films and, when combined with a change in ethylene content, permits the production of a film tailored to the particular article to be thermoformed and its physical requirements.

A selection of the above-described films were evaluated for thermoformability. A Comet Thermoformer and a female forming die were used. The cavity was six inches long and four inches wide with a 1/2 inch corner and bottom radius. The die was designed so that the depth could be changed with the use of 1/4 inch spacers. A seven inch by five inch top clamp ring was used to hold the film. Key thermoforming process steps were as follows:

1. A 26" x 20" film sample was put into a retaining frame.

2. The frame would retract into an oven of calrod heaters.

3. After a set dwell time in the oven, the frame would retract out of the oven.

4. The bottom die would then move up and the clamp ring down, sandwiching the film between them.

5. The vacuum would then be engaged, drawing the film down into the female die.

6. After the film had cooled (with vacuum holding the film in the die), the vacuum was released.

7. The clamping rind and die would retrace.

8. The film was then removed from the retaining frame.

Results of the thermoforming evaluations are shown in Table 2.

TABLE 2

| THERMOFORMING EVALUATION | | | |
|---|---|---|---|
| COMET VACUUM THERMOFORMER | | | |
| Example | Film of Example Number | Mold Depth (Inches) | Comments |
| 8 | 2 | 0.5 | Satisfactory performance. |
| 9 | 2 | 1.0 | Could not thermoform without mold modifications. |
| 10 | 5 | 1.0 | Excellent performance. |
| 11 | 5 | 1.0 | Excellent performance. |
| 12 | 7 | 0.5 | Excellent performance. |
| 13 | 7 | 1.0 | Excellent performance. |

As shown, the 2 and 4 mil copolymer film thermoformed very well. Thermoforming the 3.5mil homopolymer film was no problem in the 1/2 inch mold but required more heat and larger mold air holes to get the film to draw into the mold. Although some modifications to the molds were made during these trials, problems were experienced at the 1.0 inch mold depth for the homopolymer film in that it could not be drawn completely into the mold. The superior performance obtained in Examples 10 through 13 is attributed to the enhanced shrinkage properties of the 3.5% ethylene random copolymer film.

EXAMPLES 14 TO 22

· These examples relate to partially oriented polypropylene films having gauge thicknesses of 5.0 to 10 mils. Films were produced in the manner described for Examples 1 to 7, with the exception that the die gap used in the roll-casting process was increased to 0.100 inches to avoid film "curtaining". These heavier gauge films could only be produced from the random copolymer resins. It is believed that that inherent stretchability of the copolymeric resins facilitated the production of films in excess of 5 mils.

Two types of random copolymers were used: 1) 1.5% ethylene content copolymer, obtained from the Shell Chemical Company in Houston, TX and; 2) a 3.5% ethylene content copolymer, obtained from the Fina Oil and Chemical Company of Dallas, TX.

Properties of the films produced are presented in Table 3.

TABLE 3

| POLYPROPYLENE FILM PROPERTIES | | | | |
|---|---|---|---|---|
| 5.0 TO 10.00 MIL GAUGE | | | | |
| | | | Orientation | |
| Example | Resin | Nominal Gauge (Mils) | MDX (Nominal) | TDX (Nominal) |
| 14 | 1.5% Ethylene[1] Random Copolymer | 5.0 | 4.0 | 4.5 |
| 15 | 1.5% Ethylene[1] Random Copolymer | 7.5 | 3.5 | 6.9 |
| 16 | 1.5% Ethylene[1] Random Copolymer | 8.0 | 3.5 | 6.0 |
| 17 | 1.5% Ethylene[1] Random Copolymer | 8.5 | 3.5 | 6.3 |
| 18 | 1.5% Ethylene[1] Random Copolymer | 10.0 | 4.0 | 4.5 |
| 19 | 3.5% Ethylene[2] Random Copolymer | 5.0 | 4.0 | 8.0 |
| 20 | 3.5% Ethylene[2] Random Copolymer | 7.5 | 1.0 | 7.3 |
| 21 | 3.5% Ethylene[2] Random Copolymer | 9.0 | 3.0 | 5.8 |
| 22 | 3.5% Ethylene[2] Random Copolymer | 9.5 | 1.1 | 7.4 |

1 Shell WRS-6-147, 1.5% Ethylene Random Copolymer
2 Fina W-756, 3.5% Ethylene Random Copolymer

Samples of these films were then subjected to the thermoforming process previously described. All materials were found to thermoform well. It was generally observed with these films that, as soon as the films were heated to the forming temperature and started to sag, they would shrink to a tight web and go into the mold very uniformly for thermoforming.

A variety of commercial-type articles were also thermoformed. These included a one-inch deep rice tray, a three-ounce circular bowl and a hamburger container having a "clam shell" configuration. As with all articles produced, excellent optical clarity was obtained. These consumer articles also exhibited excellent properties during exposure to microwave heating and could handle even boiling chili.

EXAMPLE 23 TO 25

These examples demonstrate that thermoformable partially oriented polypropylene can be produced in gauge thickness of 10 to 22 mils. Sheets were produced as described for the films of Examples 1 to 7, with the exception that the die gap used was increased to 0.115 inches to accomodate the greater thicknesses. The same random copolymer resins used in Examples 14 to 22 were used to form these films.

Properties of the films produced are presented below in Table 4.

TABLE 4

| POLYPROPYLENE SHEET PROPERTIES | | | | |
|---|---|---|---|---|
| **10 TO 22 MIL GAUGE** | | | | |
| | | | Orientation | |
| Example | Resin | Nominal Gauge (Mils) | MDX (Nominal) | TDX (Nominal) |
| 23 | 1.5% Ethylene Random Copolymer[1] | 15 | 1.2 | 5.0 |
| 24 | 3.5% Ethylene Random Copolymer[2] | 13 | 3.0 | 5.0 |
| 25 | 3.5% Ethylene Random Copolymer[2] | 22 | 1.2 | 5.0 |

1 Shell WRS 6-147, 1.5% Ethylene Random Copolymer
2 Fina W-756, 3.5% Ethylene Randon Copolymer

These sheets were also subjected to the identical thermoforming process described above. All sheets were found to thermoform well. Again, the intricately-shaped consumer articles produced from the films of Examples 14 to 22 were thermoformed from the sheets of Examples 23 to 25 with excellent results achieved. Good optical properties were again exhibited.

**Claims**

1. A process for producing a thermoformed film or sheet comprising a polymer of propylene, which process comprises:
    (a) orienting the film or sheet by stretching it in at least one direction;
    (b) heating the oriented film or sheet to a temperature to permit deformation thereof;
    (c) deforming the heated film or sheet to a predetermined shape; and
    (d) while so deformed, cooling the film or sheet to cause retention of the predetermined shape.

2. A process according to claim 1 wherein the polymer of propylene comprises a homopolymer of propylene, a copolymer of propylene or a mixture of at least one such polymer.

3. A process according to claim 2 wherein the copolymer of propylene comprises a random copolymer of propylene and ethylene.

4. A process according to claim 3 wherein the random copolymer comprises from 0.1 to 10 percent by weight of polymerised ethylene and, correspondingly, from 99.9 to 90 percent by weight of polymerized propylene.

5. A process according to claim 3 or 4 wherein the polymerised ethylene is present in an amount from 0.1 to 7.0 percent by weight.

6. A process according to claim 5 wherein the polymerised ethylene is present in an amount from 1.0 to 3.5 percent by weight.

7. A process according to any preceding claim wherein the amount of polymerised ethylene and/or the degree of orientation is effective to obtain an at least partial compensation of the sag otherwise induced on thermoforming the film or sheet.

8. A process according to any preceding claim wherein the sheet is deformed by sub-atmospheric pressure exerted on one side thereof.

9. A process according to claim 8 wherein the deformation is assisted by a mechanical plug, as predetermined shape, and/or super-atmospheric pressure exerted on the other side thereof.

10. A process according to any preceding claim wherein the film or sheet is provided by a roll-casting extrusion process.

11. The use of orientation by stretching in at least one direction, prior to its thermoforming, of a film or sheet comprising a polymer of propylene to obtain an at least partial compensation of the sag otherwise induced on thermoforming the film or sheet.

12. The use of randomly polymerised ethylene in a copolymer of propylene formed as a film or sheet to obtain an at least partial compensation of the sag otherwise induced on thermoforming the oriented film or sheet.